# EUROPEAN PATENT SPECIFICATION

(11) **EP 1 705 413 B1**
(45) Date of publication and mention of the grant of the patent: **04.07.2007**
(21) Application number: 05006152.2
(22) Date of filing: 21.03.2005
(51) Int. Cl.: F16L 1/23

(54) **Pipe tensioner machine**
Rohrspanngerät
Tensionneur pour tuyaux

(43) Date of publication of application: 27.09.2006
(73) Proprietor: Diehl, Ottmar, 20260 Pattaya (TH)
(72) Inventor: Diehl, Ottmar, 20260 Pattaya (TH)
(74) Representative: Zeitler, Giselher

(56) References cited:
- EP-A- 0 296 272
- US-A- 4 917 540
- US-A- 5 893 682
- US-B1- 6 439 445

## Description

### Field of the Invention

The present invention relates to a pipe tensioner machine for maintaining a predetermined tension of the pipe string between the pipe laybarge and seafloor during offshore pipelay operation. In offshore pipelaying operations the pipe string between the laybarge and seafloor has to be kept taut to prevent overdue stress and buckling. The tension has to be maintained during all barge movements. For processing the pipe aboard the laybarge, the pipe string has to be kept steady, which means the pipe tension has to be kept within certain limits to compensate for the various sea conditions. The pipe string is squeezed between track loops or wheels which are propelled and controlled automatically.

### Background of the Invention

From EP 0 296 272 A1 there is known a pipe tensioner machine for offshore pipe laying operations comprising squeeze elements for transferring tension forces to the pipes as well as a driving structure for the squeeze elements where two top squeeze and two bottom squeeze tracks are provided which may be moved relative to each other by an adjustment device mounted within a frame structure. Although this device operates properly it does not take account of the fact that due to the weight of the pipe more drive torque can be applied on the bottom tracks, and further, that the top of the machine is obstructed and no protrusions, like valve stems, in the pipe string can pass.

Document US 4 917 540 relate to a pipeline laying system with pipeline straightening and tensioning device. A pipe take-off structure is pivotally mounted on an axis of rotation of a pipe take-off drum and a drive unit is operably connected to a reel for storage and layout of a rigid walled pipeline and adapted to permit control of the rate of layout of the pipeline.

Document US 5 893 682 relates to a pipe-support roller assembly for a laybarge, wherein the rollers are mounted resiliently so that an irregularity in the pipe causes a change in the stress on the pipe as it passes over the rollers, the rollers can move so as to accommodate the irregularity and reduce the change in the stress. The rollers are pressed against the pipe by air bag springs.

Document US 6 439 445 B1 relates to a tensioner for clamping cables, flexible pipes or bars and for moving them forwards in a controlled manner. This tensioner includes at least two conveyors, each intended to display one or more clamping members. The conveyors are each attached to a main frame element. A selective number of the conveyors can be combined using standard connection elements.

Other pipe tensioner machines (SAS Gouda bv) use two opposing clamping tracks which are arranged either in horizontal or vertical direction. These machines squeeze, however, the cross section of the pipe string oval which is due to the 180 degree opposed squeeze force.

A further 4 track type of tensioner machines (Remacut) is only suited for small pipe string diameters. Therefore, there is a long felt and unmet need for a more effective pipe tensioner machine overcoming the before mentioned disadvantages and short comings which is adaptable to very different pipe diameters transmitting a controlled squeeze force on the pipe string.

### Summary of the Invention

The problem is solved according to the present invention as cited in claim 1. With respect to further preferred embodiments of the invention reference is made to the features of the dependent claims. In accordance with the present invention the two bottom squeeze tracks are longer than the two top squeeze tracks. Thus, more drive can be provided on the bottom tracks. Four hydraulic jacks are provided for supporting the machine. According to the invention the two top traction banks slide up and down on a narrow "V" with 45 degree in between the legs of the "V". The two bottom traction banks slide on a wide "V" with 135 degrees in between. Thus, more drive can be provided on the bottom tracks. A further favourable feature of the invention is that the track length between centre drive sprocket and idler sprocket is fully engaged with the pipe. Air springs may be arranged for providing at least a substantial part of the squeeze force. In accordance with a preferred embodiment of the invention two bottom tension banks are sliding on planes with a 22.5° angle between horizontal. In accordance with this embodiment two top tension banks are sliding on planes with a 22.5° angle between vertical. Favourably hydraulic cylinders push the two top tension banks against the pipe. According to a most preferred embodiment of the present invention these cylinders are tilted in a forward direction.

### Brief Description of the Drawings

The accompanying drawings which form a part of the specification illustrate several key embodiments of the present invention. The drawings and description together serve to fully explain the invention. In the drawings:
- Fig. 1: is a perspective view of the pipe tensioner machine according to the present invention handling a 152,4 cm (60") diameter pipe,
- Fig. 2: is a side view of the machine depicted in Fig. 1,
- Fig. 3: is a front view of the machine depicted in Fig. 1,
- Fig. 4: is a perspective view of a pipe tensioner machine according to the present invention handling an 20,32 cm (8") diameter pipe,
- Fig. 5: is a side view of the machine depicted in Fig. 4,
- Fig. 6: a front view of the machine depicted in Fig. 4 and
- Fig. 7: is a perspective view of a part of a track chain with pads according to the present invention.

### Detailed Description of the Preferred Embodiments

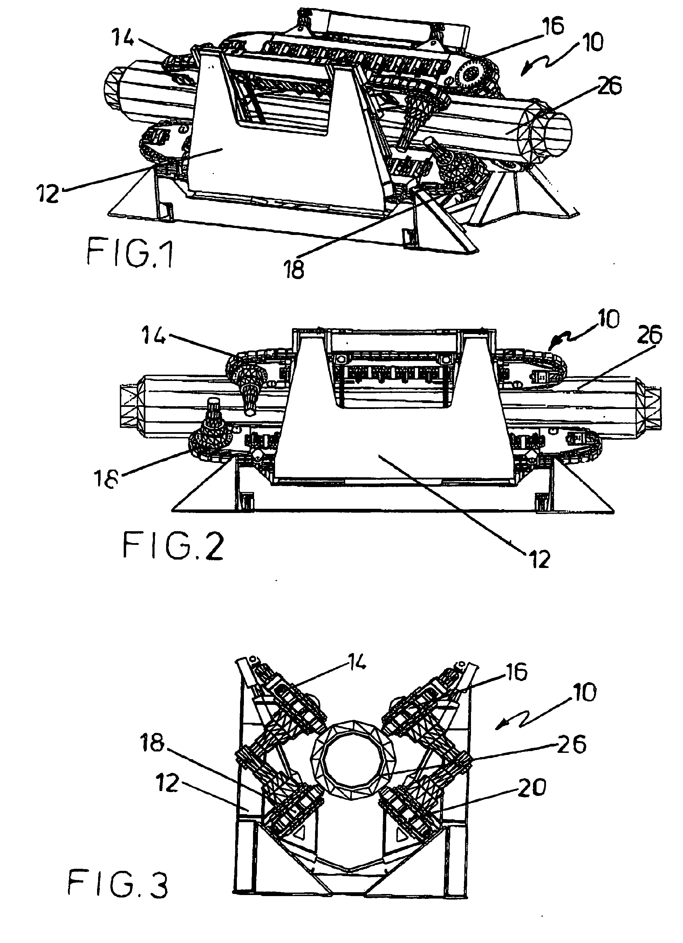

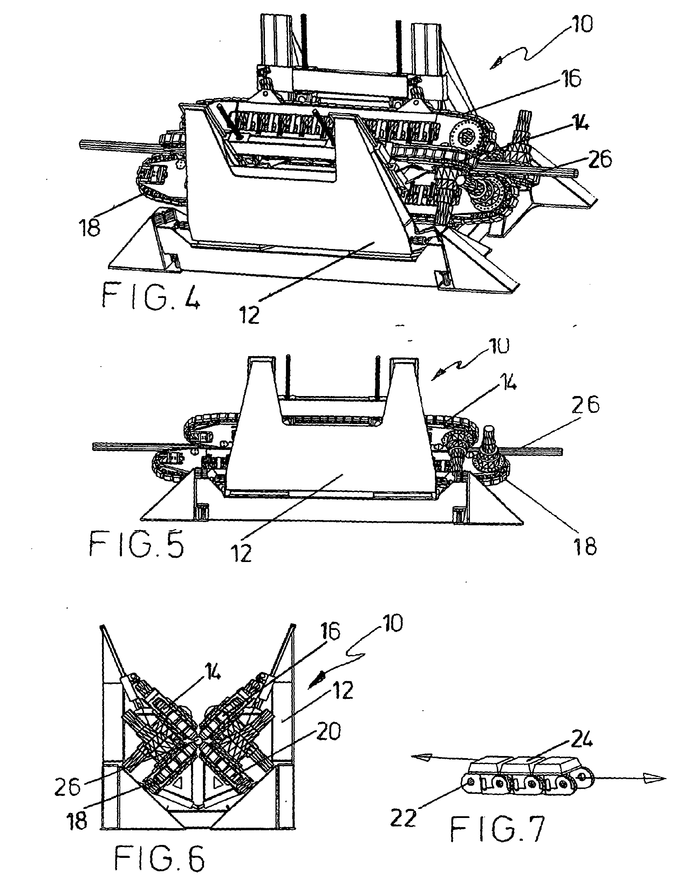

Referring now to the drawings were like numerals denote like elements Figs. 1 to 3 show a pipe tensioner machine according to the invention which is in general identified by reference numeral 10. Within a frame work 12 there are mounted two upper tension banks 14, 16 and two lower tension banks 18, 20. The tension banks include revolving track chains 22 provided with traction pads 24 for engagement with the pipe 26 to be handled (see Fig. 7). As may be taken from the drawings the two bottom tracks 18, 20 are longer than the top tracks 14, 16 to utilize the pipe weight for additional traction.

Referring now to Figs. 4 to 6 the same show a pipe tensioner machine 10 handling an 20,32 cm (8") diameter pipe string 26. The same as with the tensioner machine depicted in Figs. 1 to 3 there is also a framework 12 for mounting the two upper tension banks 14, 16 as well as the two lower tension banks 18, 20.

As mentioned before the two bottom tracks 18, 20 are longer than the two top tracks 14, 16 to utilize the pipe weight for traction. 30 tons pipe weight for instance translate into 15 tons more tension. The bottom tracks 18, 20 therefore can provide more drive torque. Furthermore, interference of the drive motors is avoided. The track length between centre drive sprocket and centre idler sprocket is fully engaged with the pipe 26.

The machine can adapt to any pipe string angle in the overbend region, i.e. the machine can be used at the end of the production line. 15 % of the squeeze force per track are provided by the drive sprocket with the adjacent track roller and the idler sprocket with the adjacent track roller. Said sprockets and rollers also do the guiding of the tension banks relative to the pipe. Air springs provide the remaining 85 % squeeze.

When laying stiff pipe, the machine, which is supported by four hydraulic jacks, will adapt the two bottom tension banks 18, 20 to the pipe string. When laying light pipe the machine can be locked in place to suite the present overbend and let the pipe string adapt to the machine.

The two bottom tension banks 18, 20 are sliding on planes with a 22.5° angle between horizontal thus maintaining for any pipe diameter a constant bottom of pipe distance. During operation those two banks are fixed in place. The two top tension banks 14, 16 are sliding on planes with a 22.5° angle between vertical thus guaranteeing at each pipe diameter symmetry and a 90° spaced pipe squeeze.

The two top tension banks 14, 16 are sliding in their guides and are pushed against the pipe by hydraulic cylinders thus making up for differences in pipe string diameter and providing squeeze. Said hydraulic cylinders are reacting against a strong back which is moved up and down by jack screws. Said cylinders are tilted forward to take the tension load from the slides.

Valve (stamps) stems protruding from the top of the pipeline or flow meter connections protruding from the side of the pipeline can pass the machine under full tension. When laying pipe down in "S" configuration the two top banks 14, 16 are moved further up to make room for the pulling head which lifts off due to lack of weight. Under 20,32 cm (8") pipe diameter two opposing tension banks are used while remaining two tension banks are locked and carry guide rollers. The tensioner machine is changed over to a different pipe diameter in a very short time. Low track tension is needed to keep pads 24 engaged with pipe string, since the distance between the center of track pin and the contact area of traction pad 24 is as narrow as possible, and therefore wear and tear on track pins is low. The traction pads 24 have transverse play to facilitate moving outwardly while the track is engaged in the radius portion of the pipe string overbend. The two top guides could be described as a narrow "V" and bottom guides as a wide "V".

## Claims

1. Pipe tensioner machine (10) for offshore pipe laying operations comprising squeeze elements (14, 16, 18, 20) for transferring tension forces to the pipe string (26) as well as a driving structure for the squeeze elements where two top squeeze tracks (14, 16) and two bottom squeeze tracks (18, 20) are provided which may be moved relative to each other by an adjustment device mounted within a frame structure,
**characterized in that** the two bottom squeeze tracks (18, 20) are longer than the two top squeeze tracks (14, 16) and that the two top squeeze tracks (14, 16) slide up and down on guides in form of a narrow "V" with 45 degree in between the legs of the "V" and the bottom squeeze tracks (18, 20) slide up and down on guides in the form of a wide "V" with 135 degree in between the legs of the "V".

2. Pipe tensioner machine (10) according to claim 1, **characterized in that** the track length between centre drive sprocket and idler sprocket is fully engaged with the pipe.

3. Pipe tensioner machine (10) according to claim 1 or 2, **characterized in that** air springs are arranged for providing at least a substantial part of the squeeze force.

4. Pipe tensioner machine (10) according to any of the preceding claims, **characterized in that** hydraulic jacks are provided for supporting the machine during operation.

5. Pipe tensioner machine (10) according to claim 4, **characterized in that** four hydraulic jacks are provided for supporting the machine.

6. Pipe tensioner machine (10) according to any of the preceding claims, **characterized in that** two bottom tension banks are sliding on planes with a 22.5° angle between horizontal.

7. Pipe tensioner machine (10) according to any of the preceding claims, **characterized in that** two top tension banks are sliding on planes with a 22.5° angle between vertical.

8. Pipe tensioner machine (10) according to any of the preceding claims, **characterized in** hydraulic cylinders pushing the two top tension banks against the pipe.

9. Pipe tensioner machine (10) according to claim 8, **characterized in** said cylinders being tilted in a forward direction.

## Patentansprüche

1. Rohrleitungsspannmaschine (10) für Offshore-Rohrleitungsverlegungsarbeiten, mit Quetschelementen (14, 16, 18, 20) zur Übertragung von Spannkräften auf den Rohrleitungsstrang (26) sowie einer Antriebsvorrichtung für die Quetschelemente, wobei zwei obere Quetschschienen (14, 16) und zwei untere Quetschschienen (18, 20) vorgesehen sind, die relativ zueinander mit Hilfe einer Einstelleinrichtung bewegbar sind, welche in einer Rahmenkonstruktion gelagert ist,
**dadurch gekennzeichnet, daß** die beiden unteren Quetschschienen (18, 20) länger sind als die beiden oberen Quetschschienen (14, 16) und daß die beiden oberen Quetschschienen (14, 16) auf Führungen in Form eines schmalen "V" mit einem 45 °-Winkel zwischen den Schenkeln des "V" auf und ab gleiten, und die unteren Quetschschienen (18, 20) auf Führungen in Form eines weiten "V" mit einem 135 °-Winkel zwischen den Schenkeln des "V" auf und ab gleiten.

2. Rohrleitungsspannmaschine (10) nach Anspruch 1, **dadurch gekennzeichnet, daß** die Schienenlänge zwischen dem Mittenantriebskettenrad und dem Leerlaufkettenrad mit der Rohrleitung voll in Eingriff steht.

3. Rohrleitungsspannmaschine (10) nach Anspruch 1 oder 2, **dadurch gekennzeichnet, daß** Luftfedern vorgesehen sind, die wenigstens einen wesentlichen Teil der Quetschkraft liefern.

4. Rohrleitungsspannmaschine (10) nach einem der vorhergehenden Ansprüche, **dadurch gekennzeichnet, daß** Hydraulikzylinder vorgesehen sind, um die Maschine während des Betriebs zu tragen.

5. Rohrleitungsspannmaschine (10) nach Anspruch 4, **dadurch gekennzeichnet, daß** vier Hydraulikzylinder zum Tragen der Maschine vorgesehen sind.

6. Rohrleitungsspannmaschine (10) nach einem der vorhergehenden Ansprüche, **dadurch gekennzeichnet, daß** zwei untere Spannbänke auf Ebenen gleiten, die zwischen sich und der Horizontalen einen Winkel von 22,5 ° einschließen.

7. Rohrleitungsspannmaschine (10) nach einem der vorhergehenden Ansprüche, **dadurch gekennzeichnet, daß** zwei obere Spannbänke auf Ebenen gleiten, die zwischen sich und der Vertikalen einen Winkel von 22,5 ° bilden.

8. Rohrleitungsspannmaschine (10) nach einem der vorhergehenden Ansprüche, **dadurch gekennzeichnet, daß** Hydraulikzylinder die beiden oberen Spannbänke gegen die Rohrleitung drücken.

9. Rohrleitungsspannmaschine (10) nach Anspruch 8, **dadurch gekennzeichnet, daß** die Zylinder in Vorwärtsrichtung geneigt sind.

## Revendications

1. Machine de tensionnement pour tube (10) pour des opérations de pose de tubes offshore, comprenant des éléments de serrage (14, 16, 18, 20) pour transférer des forces de traction à la ligne de tubes (26), ainsi qu'une structure d'entraînement pour les éléments de serrage, dans laquelle sont prévues deux voies de serrage supérieures (14, 16) et deux voies de serrage inférieures (18, 20) qui peuvent être déplacées les unes par rapport aux autres par un dispositif d'ajustement monté à l'intérieur d'une structure de cadre,
**caractérisée en ce que** les deux voies de serrage inférieures (18, 20) sont plus longues que les deux voies de serrage supérieures (14, 16), et **en ce que** les deux voies de serrage supérieures (14, 16) coulissent en montant et en descendant sur des guides en forme de V étroit avec un angle de 45° entre les bras du V, et les voies de serrage inférieures (18, 20) coulissent en montant et en descendant sur des guides en forme de V ouvert avec un angle de 135° entre les bras du V.

2. Machine de tensionnement pour tube (10) selon la revendication 1, **caractérisée en ce que** la longueur de voie entre la roue dentée d'entraînement centrale et la roue dentée folle est totalement en engagement avec le tube.

3. Machine de tensionnement pour tube (10) selon la revendication 1 ou 2, **caractérisée en ce que** des ressorts pneumatiques sont agencés pour appliquer au moins une partie substantielle de la force de serrage.

4. Machine de tensionnement pour tube (10) selon l'une quelconque des revendications précédentes, **caractérisée en ce que** des vérins hydrauliques sont prévus pour supporter la machine pendant le fonctionnement.

5. Machine de tensionnement pour tube (10) selon la revendication 4, **caractérisée en ce qu'**il est prévu quatre vérins hydrauliques pour supporter la machine.

6. Machine de tensionnement pour tube (10) selon l'une quelconque des revendications précédentes, **caractérisée en ce que** deux bancs de tensionnement inférieurs sont en coulissement sur des plans avec un angle de 22,5° par rapport à l'horizontale.

7. Machine de tensionnement pour tube (10) selon l'une quelconque des revendications précédentes, **caractérisé en** en ce que deux bancs de tensionnement supérieurs sont en coulissement sur des plans avec un angle de 22,5° par rapport à l'horizontale.

8. Machine de tensionnement pour tube (10) selon l'une quelconque des revendications précédentes, **caractérisé en ce que** des cylindres hydrauliques poussent les deux bancs de tensionnement supérieurs contre le tube.

9. Machine de tensionnement pour tube (10) selon la revendication 8, **caractérisée en ce que** lesdits cylindres sont basculés dans une direction d'avance.
